# EUROPEAN PATENT APPLICATION

(11) **EP 1 626 391 A1**
(43) Date of publication of application: **15.02.2006**
(21) Application number: 04729309.7
(22) Date of filing: 23.04.2004
(51) Int. Cl.: G10K 11/16

(54) **FLAME-RETARDANT ACOUSTIC MATERIAL**

(30) Priority: 09.05.2003 JP 2003131765
(71) Applicant: Nagoya Oil Chemical Co., Ltd., Tokai-shi, Aichi 476-0001 (JP)
(72) Inventor: OGAWA, Masanori,c/o Nagoya Oil Chemical Co., Ltd., Tokai-shi, Aichi 476-0001 (JP); ITO, Kuninori,c/o Nagoya Oil Chemical Co., Ltd., Tokai-shi, Aichi 476-0001 (JP); HAYAKAWA, Y., /o Nagoya Oil Chemical Co., Ltd., Tokai-shi, Aichi 476-0001 (JP)
(74) Representative: McCluskie, Gail Wilson
(86) International application number: PCT/JP2004/006037
(87) International publication number: WO 2004/100125

(57) **Abstract**

The object of the present invention is to provide a sound absorber such as a hood silencer, attached to the underside of the hood panel of a car to absorb sound from the engine, said sound absorber having excellent fire resistance and sound absorbability.

To attain said object, the present invention provides a fire resistant sound absorber 1 made of a porous material 2 into which a phenolic resin is impregnated, said porous material 2 using fibers with a fineness in the range of between 0.02dtex and 50dtex, with phenolic resin content in said porous material 2 being adjusted to be in the range of between 50 and 200% by mass per unit weight of said porous material 2.

## Description

### FIELD OF THE INVENTION

The present invention relates to a sound absorber for such as the sounds from a car engine, said sound absorber being fire resistant.

### BACKGROUND OF THE INVENTION

A hood silencer (1P) is attached to the underside of the hood panel of a car. Hitherto, a laminate of polyester nonwoven fabric (12P) such as PET on a glass wool (2P) having good heat resistance and sound absorbability has been provided as a hood silencer (1P) as shown in Fig. 4 (JP64-36433).

As described above, glass wool (2P) has been used as the material for the hood silencer (1P), but there is a problem in that said glass wool is apt to sting workers' hands, resulting in a deterioration of workability, and further, is apt to spread minute glass fiber dust, contaminating work environment.

Furtheremore, it is necessary to laminate a nonwoven fabric (12P) onto said glass wool (2P) so as not to expose said glass wool in the conventional hood silencer. Still further, in the case of a hood silencer made of glass wool, said glass wool can not be incinerated, making said hood silencer difficult to discard.

### DISCLOSURE OF THE INVENTION

To solve the above described problems, the present invention provide a fire resistant sound absorber made of a porous material into which a phenolic resin is impregnated, wherein said phenolic resin is impregnated in an amount in the range of between 50 and 200% by mass per 1 m² of said porous material, and said porous material consists of fibers having a fineness in the range of between 0.02dtex and 50dtex.

In said fire resistant sound absorber, said phenolic resin is preferably a cocondensation polymer of phenol alkylresorcin, and said alkylresorcin cocondensation polymer is preferably produced by adding alkylresorcin to phenol resin precondensation polymer to cocondensate.

Fibers having a fineness in the range of between 0.02dtex and 50dtex are used in said porous material and 50 to 200% by mass of fire resistant phenolic resin is contained in 1m² of said porous material. By adjusting the fineness of the fibers of said porous material and its phenolic resin content, the fire resistance and sound absorbability are also adjusted.

The fire resistant sound absorber of the present invention has excellent rigidity, fire resistance and sound absorbability.

### BRIEF DESCRIPTION OF THE DRAWINGS

Fig. 1 is a perspective view of a fire resistant sound absorber (hood silencer).
Fig. 2 is a perspective view of a fire resistant sound absorber (hood silencer) attached to the underside of the hood panel.
Fig. 3 is an explanatory diagram of the process of impregnating phenolic resin precondensation polymer.
Fig. 4 is a partial sectional view of the conventional sound absorber (hood silencer).

In the drawings
1. Fire resistant sound absorber (hood silencer)
2. Porous material
3. Hood panel

### DETAILED DESCRIPTION OF THE PREFERRED EMBODIMENT

The present invention is detailed as described below.

### [Phenolic resin]

Phenolic resin is produced by the condensation reaction between phenolic compound and an aldehyde and/or aldehyde donor. Said phenolic resin may be sulfoalkylated and/or sulfialkylated to improve its solubility in water.

Said phenolic resin is impregnated into a porous material (2) in the form of precondensation polymer. Commonly said precondensation polymer is prepared as a water solution, but if desired water-soluble organic solvent also can be used in the present invention. Said water-soluble organic solvent may be alcohols such as methanol, ethanol, isopropanol, n-propanol, n-butanol, isobutanol, sec-butanol, t-butanol, n-amyl alcohol, isoamyl alcohol, n-hexanol, methylamyl alcohol, 2-ethyl butanol, n-heptanol, n-octanol, trimethylnonylalcohol, cyclohexanol, benzyl alcohol, furfuryl alcohol, tetrahydro furfuryl alcohol, abiethyl alcohol, diacetone alcohol, and the like; ketones such as acetone, methyl acetone, methyl ethyl ketone, methyl-n-propyl ketone, methyl-n-butyl ketone, methyl isobutyl ketone, diethyl ketone, di-n-propyl ketone, diisobutyl ketone, acetonyl acetone, methyl oxido, cyclohexanone, methyl cyclohexanone, acetophenon, camphor, and the like; glycols such as ethylene glycol, diethylene glycol, triethylene glycol, propylene glycol, trimethylene glycol, polyethylene glycol, and the like; glycol ethers such as ethylene glycol mono-methyl ether, ethylene glycol mono-ethyl ether, ethylene glycol isopropyl ether, diethylene glycol mono-methyl ether, triethylene glycol mono-methyl ether, and the like; esters of the above mentioned glycols such as ethylene glycol diacetate, diethylene glycol mono-ethyl ether acetate, and the like, and their derivatives; ether such as 1,4-dioxane, and the like; diethyl cellosolve, diethyl carbitol, ethyl lactate, isopropyl lactate, diglycol diacetate, dimethyl formamide, and the like.

### (Phenolic compound)

The phenolic compound used to produce said phenolic resin may be monohydric phenol, or polyhydric phenol or a mixture of monohydric phenol and polyhydric phenol, but in a case where only monohydric phenol is used, formaldehyde is apt to be emitted when or after said resin composition is cured so that polyphenol or a mixture of monophenol and polyphenol is desirably used.

### (Monohydric phenol)

The monohydric phenols include alkyl phenols such as o-cresol, m-cresol, p-cresol, ethylphenol, isopropylphenol, xylenol, 3,5-xylenol, butylphenol, t-butylphenol, nonylphenol and the like; monohydric derivatives such as o-fluorophenol, m-fluorophenol, p-fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitorophenol, 2,4-dinitorophenol, 2,4,6-trinitorophenol and the like; monohydric phenols of polycyclic aromatic compounds such as naphthol and the like. Each monohydric phenol can be used singly, or as a mixture thereof.

### (Polyhydric phenol)

The polyhydric phenols mentioned above, include resorsin, alkylresorsin, pyrogallol, catechol, alkyl catechol, hydroquinone, alkyl hydroquinone, fluoroglrsin, bisphenol,' dihydroxynaphthalene and the like. Each polyhydric phenol can be used singly, or as a mixture thereof. Resorsin and alkylresorsin are more suitable than other polyhydric phenols. Alkylresorsin is in particular the most suitable polyhydric phenols because alkylresorsin can react with aldehydes more rapidly than resorsin.

The alkylresorsins include 5-methyl resorsin, 5-ethyl resorsin, 5-propyl resorsin, 5-n-butyl resorsin, 4,5-dimethyl resorsin, 2,5-dimethyl resorsin, 4,5-diethyl resorsin, 2,5-diethyl resorsin, 4,5-dipropyl resorsin, 2,5-dipropyl resorsin, 4-methyl-5-ethyl resorsin, 2-methyl-5-ethyl resorsin, 2-methyl-5-propyl resorsin, 2,4,5-trimethyl resorsin, 2,4,5-triethyl resorsin, and the like.

The polyhydric phenol mixture produced by the dry distillation of oil shale, which is produced in Estonia, is inexpensive and said polyhydric phenol mixture includes 5-metylresorcin, along with many other kinds of alkylresorcin having a high reactivity, making said polyhydric phenol mixture is an especially desirable raw polyphenol material.

In the present invention, said phenolic compound and aldehyde and/or aldehyde donor (aldehydes) are condensed together. Said aldehyde donor means a compound or a mixture which emits aldehyde when said compound or said mixture decomposes. The aldehydes include formaldehyde, acetoaldehyde, propionaldehyde, chloral, furfural, glyoxal, n-butylaldehyde, caproaldehyde, allylaldehyde, benzaldehyde, crotonaldehyde, acrolein, phenyl acetoaldehyde, o-tolualdehyde, salicylaldehyde and the like. The aldehyde donors include paraformaldehyde, tiroxane, hexamethylenetetramine, tetraoxymethylene, and the like.

As described above, said phenolic resin is desirably sulfoalkylated and/or sulfialkylated, to improve the stability of said water soluble phenolic resin.

### (Sulfomethylation agent)

The sulfomethylation agents used to improve the stability of the aqueous solution of phenol resins, include such as water soluble sulfites prepared by the reaction between sulfurous acid, bisulfurous acid, or metabisulfirous acid, and alkaline metals, trimethyl amine, quaternary ammonium (e.g. benzyltrimethylammonium); and aldehyde additions prepared by the reaction between said water soluble sulfites and aldehydes.

The aldehyde additions are prepared by the addition reaction between aldehydes and water soluble sulfites as mentioned above, wherein the aldehydes include formaldehyde, acetoaldehyde, propionaldehyde, chloral, furfural, glyoxal, n-butylaldehyde, caproaldehyde, allylaldehyde, benzaldehyde, crotonaldehyde, acrolein, phenyl acetoaldehyde, o-tolualdehyde, salicylaldehyde, and the like. For example, hydroxymethane sulfonate, which is one of the aldehyde additions, is prepared by the addition reaction between formaldehyde and sulfite.

### (Sulfimethylation agent)

The sulfimethylation agents used to improve the stability of the aqueous solution of phenol resins, include alkaline metal sulfoxylates of aliphatic or aromatic aldehyde such as sodium formaldehyde sulfoxylate (a.k.a. Rongalit), sodium benzaldehyde sulfoxylate, and the like; hydrosulfites (a.k.a. dithionites) of alkaline metal or alkaline earth metal such as sodium hydrosulfite, magnesium hydrosulfite and the like; hydroxyalkanesulfinate such as hydroxymethanesulfinate and the like.

### (Third components)

In the case of producing said phenol resins, if necessary, additives may be mixed in with said phenol resins as a catalyst or to adjust the pH, such additives including acidic compounds and alkaline compounds. Acidic compounds include inorganic acid or organic acid such as hydrochloric acid, sulfuric acid, orthophosphoric acid, boric acid, oxalic acid, formic acid, acetic acid, butyric acid, benzenesulfonic acid, phenolsulfonic acid, p-toluenesulfonic acid, naphthalene-α-sulfonic acid, naphthalene-β-sulfonic acid, and the like; esters of organic acid such as dimethyl oxalate, and the like; acid anhydrides such as phthalic anhydride, maleic anhydride, and the like; salts of ammonium such as ammonium chloride, ammonium sulfate, ammonium nitrate, ammonium oxalate, ammonium acetate, ammonium phosphate, ammonium thiocyanate, ammonium imidosulfonate, and the like; halogenated organic compounds such as monochloroacetic acid, the salt thereof, α,α'-dichlorohydrin, and the like; hydrochloride of amines such as triethanolamine hydrochloride, aniline hydrochloride, and the like; urea adducts such as the urea adduct of salicylic acid, urea adduct of stearic acid, urea adduct of heptanoic acid, and the like; and N-trimethyl taurine, zinc chloride, ferric chloride, and the like.

Alkaline compounds include ammonia, amines; hydroxides of alkaline metal and alkaline earth metal such as sodium hydroxide, potassium hydroxide, barium hydroxide, calcium hydroxide, and the like; oxide of alkaline earth metal such as lime, and the like; salts of alkaline metal such as sodium carbonate, sodium sulfite, sodium acetate, sodium phosphate, and the like.

### (Method of producing the phenol resins)

The phenol resins (the precondensation polymers) can be prepared using the usual method. The usual methods include method (a) comprising the condensation of a monohydric phenol and/or a polyhydric phenol and aldehydes; method (b) comprising the condensation of a precondensation polymer and a monohydric phenol and/or a polyhyrdric phenol, wherein said precondensation polymer comprises a monohydric phenol and aldehydes; method (c) comprising the condensation of a precondensation polymer and a monohydric phenol and/or a polyhydric phenol, wherein said precondensation polymer comprises a monohydric phenol, a polyhydric phenol and aldehydes; method (d) comprising the condensation of a precondensation polymer consisting of a monohydric phenol and aldehydes, and said precondensation polymer consisting of a polyhydric phenol and aldehydes; method (e) comprising the condensation of a precondensation polymer consisting of a monohydric phenol and aldehydes and/or precondensation polymers consisting of a polyhydric phenol resin and aldehydes, and said precondensation polymer consisting of monohydric phenol and polyhydric phenol and aldehydes.

In the present invention, the desirable phenolic resin is phenol-alkylresorcin cocondensation polymer. Said phenol-alkylresorcin cocondensation polymer provides a water solution of said cocondensation polymer (pre-cocondensation polymer) having good stability, and being advantageous in that it can be stored for a longer time at room temperature, compared with a condensate consisting of a phenol only (precondensation polymer). Further, in a case where said porous material (2) into which said water solution is impregnated, is put to B-stage by precuring, said porous material has good stability and does not lose its moldability after longtime storage. Further, since alkylresorcin is highly reactive to aldehyde, and catches free aldehyde to react with it, the content of free aldehyde in the resin can be reduced.

Said phenol-alkylresorcin cocondensation polymer is also advantageous in that the content of free aldehyde in said polymer is reduced by the reaction with alkylresorcin.

The desirable method for producing said phenol-alkylresorcin cocondensation polymer is first to create a reaction between phenol and aldehyde to produce a phenolic precondensation polymer, and then to add alkylresorcin, and if desired aldehyde to said phenolic precondensation polymer to create reaction. In the case of the method (a) for the condensation of monohydric phenol and/or polyhydric phenol and aldehydes, the aldehydes (0.2 mole to 3 moles) are added to said monohydric phenol (1mole), then said aldehydes (0.1 mole to 0.8 mole) are added to the polyhydric phenol (1mole) as usual. If necessary, additives may be added to the phenol resins (the precondensation polymers). In the method(s), there is a condensation reaction from heating at 55°C to 100°C for 8 to 20 hours. The addition of aldehydes may be made at once time at the beginning of the reaction, or several separate times throughout the reaction, or said aldehydes may be dropped continuously throughout the reaction.

In the case of sulfomethylation and/or sulfimethylation, the sulfomethylation agents and/or sulfimethylation agents may be added to the precondensation at an arbitrary time.

The addition of the sulfomethylation agents and/or sulfimethylation agents may be made any time such as before, during, or after the condensation.

The total amount of said sulfomethylation agent and/or sulfimethylation agent added is usually in the range of between 0.001 to 1.5 moles per lmole of phenol. In a case where said amount added is less than 0.001 mole, the hydrophile of the resulting sulfomethylated and/or sulfimethylated phenolic resin is not adequate, and in a case where said amount added is more than 1.5 moles, water resistance of the resulting sulfomethylated and/or sulfimethylated phenolic resin degrades. To provide excellent curing properties in the resulting precondensate and excellent physical properties in the cured resin, said amount to be added is preferably in the range of between 0.01 to 0.8 mole per 1 mole of phenol.

The sulfomethylation agents and/or sulfimethylation agents for sulfomethylation and/or sulfimethylation react with the methylol groups and/or aromatic gropes, so that the sulfomethyl group and/or sulfimethyl group are introduced to the precondensation prepolymers.

The solution of precondensation polymers of sulfomethylated and/or sulfimethylated phenol resins is stable widely even in acid condition (e.g. pH=1.0) or alkaline condition, so that the solution can be cured in any conditions such as acid, neutral or alkaline. In the case of curing the precondensate under acid condition, there is a decrease in the remaining methylol groups, so that no formaldehydes from the decomposed cured phenol resins appear.

Further, if necessary, the phenol resins and/or precpndensation polymers thereof may be copolycondensed with amino resin monomers such as urea, thiourea, melamine, thiomelamine, dicyandiamine, guanidine, guanamine, acetoguanamine, benzoguanamine, 2,6-diamino-1.3-diamine, and the like.

Further, curing agents such as an aldehyde and/or an aldehyde donor or an alkylol triazone derivative, and the like, may be added to said phenolic precondensation polymer (including precocondensation polymer).

As said aldehyde and/or aldehyde donor, the same aldehyde and/or aldehyde donor as used in the production of said phenolic precondensation polymer is (are) used, and an alkylol triazone derivative is produced by the reaction between urea group compound, amine group compound, and aldehyde and/or aldehyde donor. Said urea group compound used in the production of said alkylol triazoned derivative may be such as urea, thiourea, alkylurea such as methylurea, alkylthiourea such as methylthiourea; phenylurea, naphthylurea, halogenated phenylurea, nitrated alkylurea, and the like, or a mixture of two or more kinds of said urea group compounds. In particular, desirable urea group compound may be urea or thiourea. As amine group compounds, aliphatic amine such as methyl amine, ethylamine, propylamine, isopropylamine, butylamine, amylamine and the like, benzylamine, farfuryl amine, ethanol amine, ethylmediamine, hexamethylene diamine hexamethylene tetramine, and the like, and further, ammonia are illustrated, and said amine group compound is used singly or two or more amine group compounds may be used together.

The aldehyde and or aldehyde donor used for the production of said alkylol triazone derivative is (are) the same as the aldehyde and/or aldehyde donor used for the production of said phenolic precondensation polymer.

To synthesize said alkylol triazone derivatives, commonly 0.1 to 1.2 moles of said amine group compound(s) and/or ammonia, and 1.5 to 4.0 moles of aldehyde and/or aldehyde donor are reacted with 1 mole of said urea group compound.

In said reaction, the order in which said compounds are added is arbitrary, but preferably, first the required amount of aldehyde and/or aldehyde donor is (are) put in a reactor, then the required amount of amine group compound(s) and/or ammonia is (are) gradually added to said aldehyde and/or aldehyde donor, the temperature being kept at lower than 60°C, then further, a required amount of said urea group compound(s) is (are) added to the resulting mixture at 80 to 90°C for 2 to 3 hours, being agitated to react together. Usually, 37% by mass of formalin is used as said aldehyde and/or aldehyde donor, but some of said formalin may be replaced by paraform aldehyde to increase the concentration of the reaction product.

Further, in a case where hexamethylene tetramine is used, the solid content of the reaction product obtained is much higher. The reaction between said urea group compound, said amine group compound and/or ammonia and said aldehyde and/or aldehyde donor is commonly performed in a water solution, but water may be partially or wholly replaced by one or more kinds of alcohol(s) such as methanol, ethanol, isopropanol, n-butanol, ethylene glycol, diethlene glycol, and the like, and one or more kinds of other water soluble solvent(s) such as a ketone group solvent such as acetone, methylethyl ketone, and the like can also be used as solvent.

The amount of said curing agent to be added is, in the case of aldehyde and/or aldehyde donor, in the range of between 10 and 100 parts by mass to 100 parts by mass of said phenolic precondensation polymer (precocondensation polymer), and in the case of alkylol triazone, 10 to 500 parts by mass to 100 parts by mass of said phenolic precondensation polymer (precocondensation polymer).

### [Porous material]

Said porous material (2) used in the present invention is made of an organic fiber material or foamed plastics having an interconnected cell structure:

Said organic fiber of said porous material(2) is, for example, a polyester fiber such as polyethylene telephthalate fiber, polybutylene telephthalate fiber, and the like, a synthetic fiber, such as polyethylene fiber, polypropylene fiber, polyamide fiber, acrylic fiber, urethane fiber, polyvinylchloride fiber, polyvinylidene chloride fiver, acetate fiber, vinylon fiber, and the like, a semisynthetic fiber, such as rayon fiber, and the like, a natural fiber, such as coconut fiber, hemp fiber, kenaf fiber, bamboo fiber and the like or a reclaimed fiber obtained by fiberizing a fiber product made of said fiber(s). Said fiber is singly usable or two or more kinds of said fibers may be used.

Said foamed plastics include, for example, foamed polyester, such as foamed polyethylene telephthalate, foamed polybutylene telephthalate, and the like, foamed polyethylene, foamed polypropylene, foamed polyamide, foamed acrylic resin, foamed urethane resin, foamed polyvinylchloride, foamed polyvinylidenechlorde, foamed acetate, and the like.

The common unit weight (g/m²) of said porous material used in the present invention is 200g/m² to 1000g/m².

Further, the fiber used in said porous material of the present invention may be treated with a flame-retardant.

The fineness of said fiber of said porous material(2) is preferably 0.02dtex to 50dtex, but more preferably 0.1dtex to 30dtex.

In a case where the fineness is less than 0.02dtex, the rigidity of the resulting sound absorber (1) may degrade, and in a case where the fineness is greater than 50dtex, the resulting sound absorber has insufficient sound absorbability.

Said phenolic precondensation polymer is impregnated into said porous material (2) using well known methods such as the dipping method, spray method, flow coating method, roll coating method, and the like.

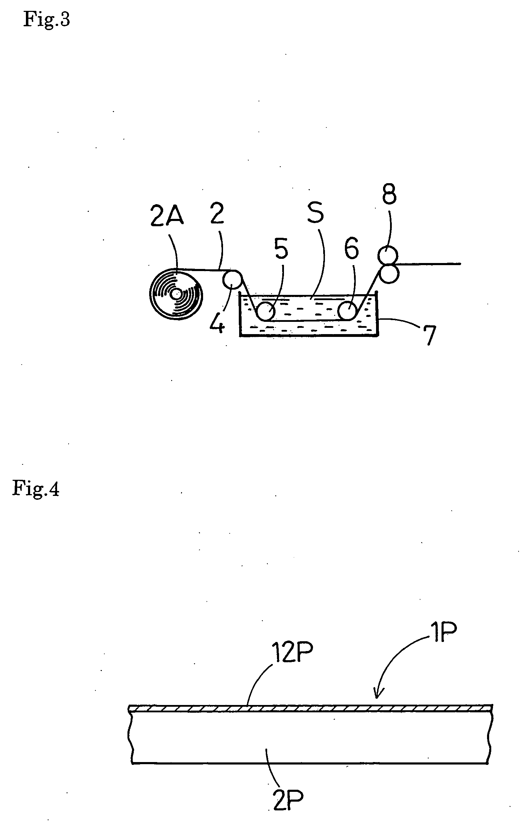

For instance, as shown in Fig. 3, said porous material (2) is pulled out from a roll (2A) of said porous material (2) to be introduced into a tank (7) filled with phenolic precondensation polymer (water solution S) through guide rolls (4, 5, 6) which impregnate said phenolic presondensation polymer into said porous material(2). If desired, said porous material (2) into which said precondensation polymer is impregnated may be squeezed with a squeezing roll (8) to adjust amount of said precondensation polymer to be impregnated therein.

Said phenolic resin is fire resistant, and by adjusting the content of said phenolic resin in said porous material (2), the fire resistance of said sound absorber (1) can be adjusted. The desirable amount of said phenolic resin to be contained in said porous material (2) may be 50 to 200% by mass, more desirably 55 to 170% by mass, but ideally 60 to 150% by mass, per 1m² of said porous material (2)(g/m²), and in a case where the content of said phenolic resin is less than 50% by mass per 1m² of said porous material (2)(g/m²), the fire resistance of the resulting sound absorber (1) degrades, and in a case where the content of said phenolic resin is greater than 200% by mass, the sound absorbability of said sound absorber becomes inferior.

### [Manufacture of said fire resistant sound absorber]

A prescribed amount of said phenolic precondensation polymer is impregnated into said porous material (2), after which and then said porous material (2) is dried and pre-cured. Said drying process is carried out by blowing hot air onto said porous material (2), and during said drying process, decompression may occur.

During said pre-curing process, said precondensation polymer may be cured completely, but preferably cured to be at its B-stage. Said porous material (2) containing said precondenstion polymer at its B-stage has good moldability, and can be stored for a long time.

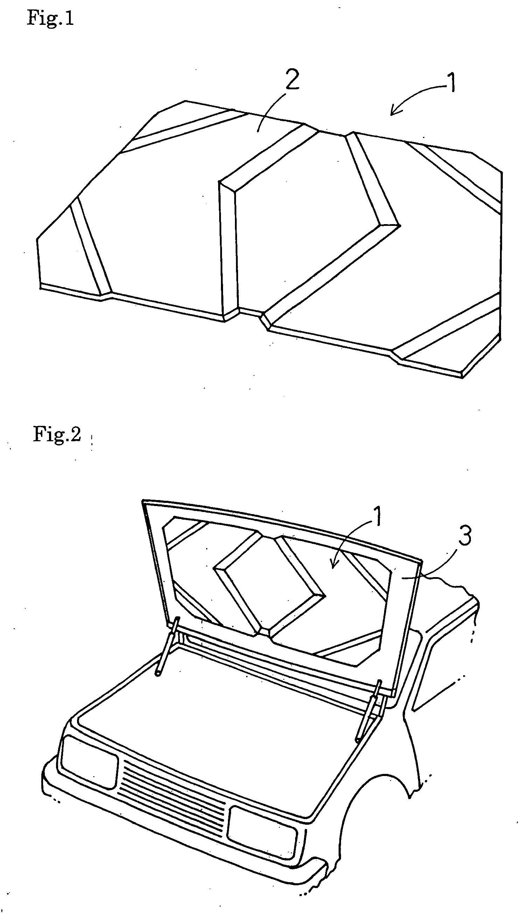

After said pre-curing process, said porous material (2) is then molded by hot press molding to produce said sound absorber (1). In said hot press molding, for instance, a molding machine having a lower mold panel and an upper mold panel, having desired shaped mold faces is used, and a hood silencer (1) having a prescribed shape, as shown in Fig.1, is produced.

Said fire resistant sound absorber (1) of the present invention can be used as a sound absorber (1) without being laminated with a fire resistant surface material, and the like.

Further, said fire resistant sound absorber (1) of the present invention may be single or multi-layered.

Still further, a fiber sheet made of above mentioned synthetic fiber or the like may be laminated onto one or both side(s) of said fire resistant sound absorber (1) as either surface material or back side material.

If desired, in the present invention, amino group monomers such as urea, thiourea, melamine, thiomelamine, dicyandiamide, guanidine, acetogunamine, benzoguanamine, 2,6-diamino-1,3-diamine and the like, a precondensation polymer of said amino group monomer, emulsion or water solution or a powder of a thermoplastic resin such as polyethylene, polypropylene, ethylene-propylene copolymer, ethylene-vinylacetate copolymer, polyvinylacetate, polyarylic ester, polystyrene, styrene-butadiene copolymer, acrylonitorile-butadiene copolymer, acrylonitrile-butadien-styrene terpolymer, a polyamide having a low melting point, polyester having a low melting point, and the like; a natural rubber and derivatives thereof; fillers and surfactants such as calcium carbonate, magnesium carbonate, barium sulfate, calcium sulfate, calcium sulfurous acid, calcium phosphoric acid, calcium hydroxide, magnesium hydroxide, aluminum hydroxide, magnesium oxide, titanium oxide, iron oxide, zinc oxide, aluminum oxide, silica, diatomaceous earth, dolomite, gypsum, talc, clay, asbestos, mica, calcium silicate, bentonite, white carbon, carbon black, iron powder, aluminum powder, glass powder, stone powder, synthetic resin powder, furnace slag, flyash, cement, zirconia powder, linter, linen, sisal, wood flour, wheat flour, walnut flour, starch, coconut shell flour, rice powder, activated carbon, charcoal, bark, chitosan; higher fatty acids such as stearic acid, palmitin acid and the like; higher alcohols such as palmitin alcohol, stearyl alcohol and the like; an ester of fatty acid such as butylstearate, glycerin monostearate and the like; amides of fatty acid; a natural wax such as carnauba wax and the like; synthetic wax; plasticizers, such as pigment, dye, fire retardant, smoke retardant, insect repellent, antiseptic, antioxidant, ultraviolet absorber, fluorescence dye, surfactant, foaming agents, oil repellent, dioctyl phthalate (DOP), dibutyl phthalate (DBT) and the like; antioxidants, anti-static additives, crystallization promoters, and the like; the above-mentioned third components may be concontained.

Said third component(s) may be added directly to or coated on said porous material(s) or said third component(s) may be added to said precondensation polymer of said phenolic resin which is impregnated into said porous material(s).

Said fire resistant sound absorber (1) of the present invention is used as cylinder head-cover silencer, engine undercover silencer, outer dash silencer, dash silencer, room partition silencer, ceiling material, interior material and the like which are used in a car, and as a building material, and the like. Said fire resistant sound absorber is especially useful as a hood silencer which is requested to be fire resistant (heat resistant), and have sound absorbability.

The present invention is described in detail by the following EXAMPLES, but the scope of the present invention should not be limited by these EXAMPLES.

### EXAMPLE 1

A 60% by mass (solid) of a phenol holmaldehyde precondensation polymer (phenolic resin precondensation polymer) was impregnated into a sheet made of needle punched polyethylene telephthalate fiber (unit weight 400g/m² thickness 10mm). The amount of said precondensation polymer impregnated therein was adjusted to be 50% by mass (solid of phenolic resin) per unit weight of said sheet.

Said sheet, impregnated with said phenolic resin precondensation polymer, was dried at 150°C to precure and after precuring, was hot-pressed at 200°C for 60seconds, and a molded into a sheet with a thickness of 5mm (EXAMPLE 1).

### EXAMPLES 2 and 3

Said phenolic resin precondensation polymer of EXAMPLE 1 was impregnated into said sheet of EXAMPLE 1, the amount of said phenolic resin to be impregnated therein was adjusted to be 100% and 200% by mass (solid) per unit weight of said sheet. Said sheets were precured and hot-pressed the same as in EXAMPLE 1, producing molded sheets with a thicknesses of 5mm each (EXAMPLES 2 and 3).

### COMPARISONS 1 and 2

Said phenolic resin precondensation polymer of EXAMPLE 1 was impregnated into said sheet of EXAMPLE 1, and the amount of said phenolic resin impregnated therein was adjusted to be 40% and 250% by mass (solid) per unit weight of said sheet. Said sheets were precured and hot-pressed the same as in EXAMPLE 1, producing molded sheets with a thickness of 5mm each (COMPARISOMS 1 and 2).

### (Burning test)

A burning test according to the FMVSS-302 horizontal test, was performed on each molded sheet from EXAMPLES 1 to 3, and COMPARISONS 1 and 2. The results are shown in Table 1.

### (Sound absorption test)

A sound absorbing test according to the JIS-A1405 was performed on each molded sheet from EXAMPLES 1 to 3 and COMPARISONS 1 and 2. The results are shown in Table 1.

**Table 1**

| Molded sheet (Sound absorber) | Burnig test | Sound Absorbability (%) | | | |
|---|---|---|---|---|---|
| | | 500Hz | 1000Hz | 2000Hz | 4000Hz |
| EXAMPLE 1 | Fire retardancy | 35 | 45 | 80 | 83 |
| EXAMPLE 2 | Nonflammability | 35 | 50 | 85 | 84 |
| EXAMPLE 3 | Nonflammability | 30 | 45 | 80 | 75 |
| COMPARISON 1 | Slow flammability | 30 | 40 | 65 | 60 |
| COMPARISON 2 | Nonflammability | 15 | 20 | 45 | 40 |

Referring to the results in Table 1, the molded sheets into which phenolic resin has been impregnated in amounts of 50% by mass, 100% by mass, 200% by mass, and 250% by mass per unit weights of said sheets (EXAMPLES 1 to 3 and COMPARISONS 2) each exhibit fire retardation or nonflammability, while a molded sheet into which phenolic resin has been impregnated in an amount of 40% by mass shows slow flammability.

Further, as for the results of the sound absorption test, it was confirmed that the molded sheets of EXAMPLES 1 to 3 and COMPARISON 1 each have sufficient sound absorbability while the molded sheet into which phenolic resin has been impregnated in an amount of 250% by mass (COMPARISON 2) has insufficient sound absorbing qualities.

### EXAMPLE 4

A 55% by mass solution (solid) of a phenol-alkylresorcin-formaldehyde precocondensation polymer (phenolic resin precocondensation polymer) was impregnated into a sheet made of needle punched polypropylene fibers (fineness 0.02dtex, unit weight 300g/m², thickness 15mm). The amount used to impregnate was adjusted to be 70% by mass (solid of phenolic resin) per unit weight of said sheet.

Said sheet into which said phenolic resin precocondensation polymer was impregnated was then dried at 150°C, and procured, and after precuring, said sheet was hot-pressed at 200°C for 45 seconds, producing a molded sheet with a thickness of 7mm (EXAMPLE 4).

### EXAMPLES 5 and 6

Said phenolic resin precocondensation polymer from EXAMPLE 4 was impregnated into two separate sheets made of needle punched polypropylene fiber (fineness 20dtex, unit weight 300g/m², thickness 15mm) and (fineness 50dtex, unit weight 300g/m², thickness 15), and the amounts of said phenolic resin to be impregnated therein were each adjusted to be 70% by mass per unit weights of said sheets, following which each sheet was precured and hot-pressed the same as in EXAMPLE 4, producing molded sheets with thickness of 7mm (EXAMPLES 5 and 6).

### COMPARISONS 3 and 4

Said phenolic resin precocondensation polymer of EXAMPLE 4 was respectively impregnated into two seperate sheets made of needle punched polypropylene fiber (fineness 0.01dtex, unit weight 300g/m², thickness 15mm) and (fineness: 60dtex, unit weight 300g/m², thickness 15mm), the amounts of said phenolic resin to be impregnated therein were each adjusted to be 70% by mass per unit weight of said sheets, and each sheet was precured and hot-pressed the same as in EXAMPLE 4, producing molded sheets with a thickness of 7mm each (COMPARISONS 3 and 4).

A rigidity test, burning test, and sound absorption test were performed on said molded sheets of EXAMPLES 4, 5, and 6, and COMPARISONS 3 and 4. The results are shown in Table 2. Said rigidity test is performed according to JIS-K6911, General test method for measuring thermoplastic resin 5.17 bending strength. Concerning the burning test and sound absorption test, the same methods as in EXAMPLES 1 to 3, and COMPARISONS 1 and 2 were applied.

**Table 2**

| Molded sheet (sound absorber) | Rigidity test (N/mm²) | Burning test | Sound absorbability (%) | | | |
|---|---|---|---|---|---|---|
| | | | 500Hz | 1000Hz | 2000Hz | 4000Hz |
| EXAMPLE 4 | 1.5 | Nonflammability | 40 | 68 | 95 | 90 |
| EXAMPLE 5 | 1.8 | Nonflammability | 33 | 60 | 90 | 83 |
| EXAMPLE 6 | 1.7 | Nonflammability | 30 | 55 | 85 | 83 |
| COMPARISON 3 | 0.8 | Nonflammability | 42 | 70 | 95 | 92 |
| COMPARISON 4 | 1.5 | Nonflammability | 18 | 22 | 48 | 45 |

In said rigidity test, it was recognized that the molded sheets made of fiber with a finesses of 0.02dtex, 20dtex, 50dtex and 60dtex are rigid enough to be the sound absorbers, (EXAMPLES 4, 5, and 6, and COMPARISON 4), while molded sheet with a fineness of 0.01dtex lacked the sufficient rigidity as the sound absorber (COMPARISON 3). The test results suggest that every molded sheet (EXAMPLES 4, 5, and 6, and COMPARISONS 3 and 4) was nonflammable.

Referring to the results of the sound absorption test, said fiber molded sheet with a fineness of 60dtex, has insufficient sound absorbability (COMPARISON 4).

The above test results suggest that said molded fiber sheet with a fineness of less than 0.02dtex has lacked sufficient rigidity, and that said fiber molded sheet with a fineness greater than 50dtex is insufficiently sound absorbent.

### EXAMPLE 7

A 60% by mass solution (solid) of a phenol-alkylresorcin-holmaldehyde precocondensation polymer and alkylol triazone derivative was impregnated into a sheet made two kinds of needle punched polyester fibers (40% by mass, with a fineness of 0.3dtex) and (60% by mass with a fineness of 8dtex). The amount of said precondensation polymer to be impregnated therein was adjusted to be 100% by mass (solid) per unit weight of said sheet, and an alkylol triazone derivative was added in an amount of 50parts by mass to 100parts by mass of 60% by mass solution(solid) of said precocondensation polymer.

Said sheet, into which said precocondensation polymer was impregnated, was precured at 120°C, after which, said sheet was hot-pressed at 210°C for 70seconds, producing a molded sheet with a thickness of 10mm (EXAMPLE 7).

### EXAMPLES 8 and 9

Said phenolic resin precocondensation polymer of EXAMPLE 7 was impregnated into two separate polyester fiber sheets from EXAMPLE 7, each with a unit weights of 100g/m² and 800g/m², with the amount of said phenolic resin precocondensation polymer for impregnation being adjusted to be 100% by mass (solid) per unit weight of each sheet, each sheet being precured and hot-pressed the same as in EXAMPLE 7, to be molded sheets, each with a thicknesses of 10mm (EXAMPLES 8 and 9).

### COMPARISONS 5 to 10

Said phenolic resin precocondensation polymer used in EXAMPLE 7 was impregnated into the three kinds of sheets (unit weights 40g/m², 100g/m², and 800g/m²) used in EXAMPLES 7, 8 and 9, the amounts to be impregnated being adjusted to be 30% by mass and 250% by mass as solid of said phenolic resin per unit weight of said sheets, following which said sheets were precured and hot-pressed in the same way as in EXAMPLE 7, to be molded sheets each with a thickness of 10mm.

COMPARISON 5 (unit weight of sheet 40g/m², amount of resin impregnated therein 30% by mass).

COMPARISON 6 (unit weight of sheet 100g/m², amount of resin impregnated therein 30% by mass).

COMPARISON 7 (unit weight of sheet 800g/m², amount of resin impregnated therein 30% by mass).

COMPARISON 8 (unit weight of sheet 40g/m², amount of resin impregnated therein 250% by mass).

COMPARISON 9 (unit weight of sheet 100g/m², amount of resin impregnated therein 250% by mass).

COMPARISON 10 (unit weight of sheet 800g/m², amount of resin impregnated therein 250% by mass).

Rigidity test, burning test, and sound absorption test were performed on each of said molded sheets from EXAMPLES 7 to 9 and COMPARISONS 5 to 10.

The same test methods were applied. The results are shown in Table 3.

**Table 3**

| Molded sheet (sound absorber) | Rigidity test (N/mm²) | Burning test | Sound absorbability (%) | | | |
|---|---|---|---|---|---|---|
| | | | 500Hz | 1000Hz | 2000Hz | 4000Hz |
| EXAMPLE 7 | 1.4 | Nonflammability | 30 | 45 | 80 | 82 |
| EXAMPLE 8 | 2.2 | Nonflammability | 30 | 50 | 92 | 90 |
| EXAMPLE 9 | 3.8 | Nonflammability | 28 | 60 | 90 | 84 |
| COMPARISON 5 | 0.5 | Slow flammability | 25 | 40 | 78 | 80 |
| COMPARISON 6 | 0.8 | Slow flammability | 25 | 46 | 75 | 74 |
| COMPARISON 7 | 0.9 | Slow flammability | 28 | 45 | 85 | 78 |
| COMPARISON 8 | 1.8 | Nonflammability | 15 | 30 | 50 | 45 |
| COMPARISON 9 | 2.9 | Nonflammability | 20 | 33 | 55 | 52 |
| COMPARISON 10 | 4.1 | Nonflammability | 18 | 26 | 54 | 55 |

The results of the rigidity test make clear that said molded sheets of EXAMPLES 7 to 9, each have sufficient rigidity for a sound absorbing material, and that said molded sheets of COMPARISONS 8 to 10 each also have sufficient rigidity while said molded sheets of COMPARISONS 5 to 7 each have insufficient rigidity for a sound absorbing material.

The results of the burning test make clear that said molded sheets of EXAMPLES 7 to 9 are each fire resistant, and that said molded sheets of COMPSARISONS 8 to 10 are each also fire resistant, while said molded sheets of COMPARISONS 5 to 7 into which the amount of said phenolic resin impregnated was respectively 30% by mass per unit weight for each of said sheets, have respectively slow flammability, not fire resistance or nonflammability.

The results of the sound absorption test show that said molded sheets of EXAMPLES 7 to 9 have better sound absorbability than said molded sheets of COMPARISONS 5 to 10 at any frequency. Further, it was recognized that said molded sheets of COMPARISONS 8 to 10 which contain said phnolic resin in an amount of 250% per mass for unit weight have particularly poor sound absorbability.

The above described test results suggest that in a case where said molded sheet contains said phenolic resin in an amount of less than 50% by mass per unit weight of said sheet, said molded sheet becomes not fire resistant, and in the case where said molded sheet contains said phenolic resin in an amount of more than 200% by mass per unit weight of said molded sheet said molded sheet has poor sound absorbability.

### EXAMPLE 10

As shown in Fig.3, 60% by mass (solid) of a phenol formaldehyde precondensation polymer (phenolic resin precondensation polymer) was impregnated in a sheet made of needle punched polyester (polyethylene telephthalate fiber) with a fineness of 10dtex), and with a unit weight of 400g/m² and thickness of 10mm. The amount of said precondensation polymer to be impregnated therein was adjusted to be 50% by mass as solid per unit weight of said sheet.

Said sheet into which said phenolic resin precondensation polymer was impregnated was dried and precured at 150°C, to put said phenolic resin at its B-stage, after which said sheet was hot-pressed at 200°C for 60 seconds using a molding machine, having upper and lower mold parts, both having desirably shaped mold faces, to obtain a hood silencer (1), having a prescribed shape as shown in Fig. 1. As shown in Fig. 2, said hood silencer (1) was attached to the underside of the hood panel (3). Said hood silencer (1) was easily handled, so has good workability, and was easily attached to said hood panel (3).

Further, less dust flew about from said hood silencer (1), maintaining a good working environment.

Further, said hood silencer (1) had excellent rigidity, sound absorbability and fire resistance.

### EXAMPLE 11

A 55% by mass (solid) of a phenol-alkylresorcin precocondensation polymer into which 5% by mass of a fluorocarbon water repellent agent, and 3% by mass of a phosphoric fire retardant were mixed, was impregnated into a sheet made of a fiber mixture consisting of 30% by mass of polyester fiber with a fineness of 1.5dtex, 40% by mass of polyester fiber with a fineness of 10dtex, 20% by mass of hemp fiber with a fineness of 45dtex, and 5% by mass of low melting point polyester fiber with a fineness of 6dtex and melting point of 110°C, said sheet being manufactured by heating said fiber mixture at 130°C, melting said low melting point polyester fiber in a heating chamber, and then pressing said fiber mixture with a cooling roll, to adjust its thickness to 15mm, and unit weight per said sheet to 500g/m².

The amount of said phenolic resin to be impregnated therein was adjusted to be 70% by mass (solid) per unit weight of said sheet.

Said sheet into which said precocondensation polymer was impregnated, was then dried and precured at 100°C, after which, said sheet was hot-pressed at 200°C for 65 seconds to obtain a sound absorber (EXAMPLE 11). Said sound absorber was fire resistant, having excellent rigidity and sound absorbability.

### EXAMPLE 12

A 50% by mass (solid) of a sulfomethylated phenol-alkylresorcin precocondensation polymer was impregnated into a sheet made of a needle punched fiber mixture of polypropylene fiber with a fineness of 0.5dtex(40% by mass), rayon fiber with a fineness of 6dtex (30% by mass), polyamide fiber with a fineness of 3dtex (5% by mass), kenaf fibers with a fineness of 45dtex (25% by mass), the unit weight of said sheet being 100g/m², and thickness 10mm.

The amount of said phenolic resin to be impregnated therein was adjusted to be 80% by mass (solid) per unit weight of said sheet.

Said sheet into which said precocondensation polymer was impregnated, was dried and precured at 120°C, after which 3 pieces of said sheet were laminated to each other, and then said laminated sheets were hot-pressed at 200°C for 70seconds to obtain a sound absorber (EXAMPLE 12).

Said sound absorber was fire resistant, with excellent rigidity and sound absorbability.

### EXAMPLE 13

A 50% by mass (solid) of a sulfomethylated phenol-alkylresorcin precocondensation polymer and alkylol triazone derivative was impregnated into a sheet made of a needle punched fiber mixture of polypropylene fiber with a fineness of 0.5dtex (40% by mass), rayon fiber with a fineness of 6dtex (30% by mass), polyamide fiber with a fineness of 3dtex (5% by mass), and bamboo fiber with a fineness of 45dtex (25% by mass), the amount of said phenolic resin to be impregnated therein was adjusted to be 80% by mass (solid) per unit weight of said sheet.

Sixty parts by mass of said alkylol triazone derivative were mixed into 100parts by mass of said precocondensation polymer whose solid content was 50% by mass.

Said sheet into which said precocondensation polymer was impregnated, was then dried and precured at 120°C, after which three pieces of said precured sheets were laminated to each other, and said laminated sheets were hot pressed at 200°C for 70 seconds to obtain a sound absorber (EXAMPLE 13).

Said sound absorber was fire resistant, and had excellent rigidity and sound absorbability.

## Claims

1. A fire resistant sound absorber made of a porous material into which a phenolic resin is impregnated, wherein said phenolic resin is impregnated in an amount in the range of between 50 and 200% by mass per 1m² of said porous material and said porous material consists of fibers having a fineness in the range of between 0.02dtex and 50dtex.

2. A fire resistant sound absorber in accordance with Claim 1, wherein said phenolic resin is a cocondensation polymer of phenol-alkylresorcin.

3. A fire resistant sound absorber in accordance with Claim 2, wherein said phenol-alkylresorcin cocondensation polymer is produced by adding alkylresorcin to phenolic resin precondensation polymer to cocondensate.
